Europäisches Patentamt

European Patent Office

Office européen des brevets

(19)

(11) Veröffentlichungsnummer: **0 209 160 B1**

(12) **EUROPÄISCHE PATENTSCHRIFT**

(45) Veröffentlichungstag der Patentschrift: **18.09.91**

(51) Int. Cl.⁵: **B60R 16/02, H01R 25/00**

(21) Anmeldenummer: **86109939.8**

(22) Anmeldetag: **19.07.86**

(54) Kontakteinrichtung in Kraftfahrzeugen.

(30) Priorität: **19.07.85 DE 3525863**

(43) Veröffentlichungstag der Anmeldung:
**21.01.87 Patentblatt 87/04**

(45) Bekanntmachung des Hinweises auf die
Patenterteilung:
**18.09.91 Patentblatt 91/38**

(84) Benannte Vertragsstaaten:
**DE FR GB IT SE**

(56) Entgegenhaltungen:
**DE-A- 2 922 278**
**DE-B- 2 748 431**

**PATENT ABSTRACTS OF JAPAN, Band 6, N.
240 (M-174)(1118), 27. November 1982**

(73) Patentinhaber: **Bayerische Motoren Werke Aktiengesellschaft**
**Patentabteilung AJ-30 Postfach 40 02 40 Petuelring 130**
**W-8000 München 40(DE)**

(72) Erfinder: **Roloff, Hartmut**
**Hauptstrasse 4**
**W-8069 Reichertshausen(DE)**

(74) Vertreter: **Bullwein, Fritz**
**Bayerische Motoren Werke Aktiengesellschaft Postfach 40 02 40 Petuelring 130 AJ-
33**
**W-8000 München 40(DE)**

## Beschreibung

Die Erfindung bezieht sich auf eine Kontakteinrichtung in Kraftfahrzeugen zwischen einem Mehrfach-Anzeigeinstrument und einer zu zugeordneten elektrischen Geräten führenden Verkabelung, mit zwei kontaktgebend zusammengefügten Steckerteilen an der Verbindungsstelle zwischen Anzeigeinstrument und Verkabelung, von denen ein Steckerteil am Anzeigeinstrument und das andere an der Verkabelung gehalten ist.

Derartige Kontakteinrichtungen sind im Automobilbau allgemein üblich und ermöglichen einen Austausch des Mehrfach-Anzeigeinstruments bzw. eine einfache Montage. Auf dem Anzeigeinstrument sollen beispielsweise die pro Tag bzw. seit Zulassung des Kraftfahrzeugs zurückgelegte Wegstrecke oder Angaben über den Verlauf eines Service-Intervalls wiedergegeben werden. Wie bei mechanisch arbeitenden Anzeigeinstrumenten besteht bei elektronischen Instrumenten das Problem, daß bei einem Austausch des Anzeigeinstruments der gesamte bisher wiedergegebene Inhalt verloren geht. Die mit einem "neuen" Anzeigeinstrument wiedergegebenen Anzeigen entsprechen nicht dem wahren Sachverhalt.

Der Erfindung liegt die Aufgabe zugrunde, eine Kontakteinrichtung der eingangs genannten Art zu schaffen, bei der auch bei Ersetzen des Mehrfach-Anzeigeinstruments durch ein entsprechendes anderes Anzeigeinstrument der wiedergegebene Inhalt den tatsächlichen Verhältnissen entspricht.

Die Erfindung löst diese Aufgabe dadurch, daß der auf dem Anzeigeinstrument wiederzugebende Inhalt in einem nicht-flüchtigen elektronischen Speicher abgelegt und aus diesem für die Wiedergabe auf dem Anzeigeinstrument entnommen ist, und daß der den Speicher enthaltene Speicherbaustein mit dem an der Verkabelung gehaltenen Steckerteil mechanisch unverlierbar verbunden ist.

Der mit dem Anzeigeinstrument wiedergegebene Inhalt ist nunmehr getrennt von diesem Instrument angeordnet und kann auch bei Austausch dieses Instruments nicht beeinträchtigt bzw. geändert werden. Ein Austausch des Anzeigeinstruments ist problemlos möglich. Dieses wird aus dem Speicher mit dem tatsächlichen für das Kraftfahrzeug wesentlichen Inhalt beschrieben. Wollte man den Speicher austauschen, wäre hierzu ein Austausch der gesamten Verkabelung erforderlich. Dies würde nur mit erheblichem Aufwand möglich sein und unter normalen Umständen nicht in Frage kommen.

Bei einer vorteilhaften Ausgestaltung der Erfindung ist der Speicherbaustein und das an der Verkabelung gehaltene Steckerteil in einem gemeinsamen Gehäuse untergebracht. Dadurch ist die Gefahr, den Speicherbaustein bei Reparaturen in der Nähe des Steckerteils unbeabsichtigt zu beschädigen und damit möglicherweise unwirksam zu machen, ausgeschlossen.

Ferner kann der Speicherbaustein ein Kontaktteil besitzen, das entsprechend den an der Verkabelung gehaltenen Steckerteil aufgebaut ist und dessen Kontaktteile mit denen dieses Steckerteils in einer Ebene liegen. Dadurch wird die Kontaktierung zwischen dem Anzeigeinstrument einerseits und der Verkabelung und dem Speicherbaustein andererseits vereinfacht.

In der Zeichnung ist ein Ausführungsbeispiel der Erfindung dargestellt. Es zeigt

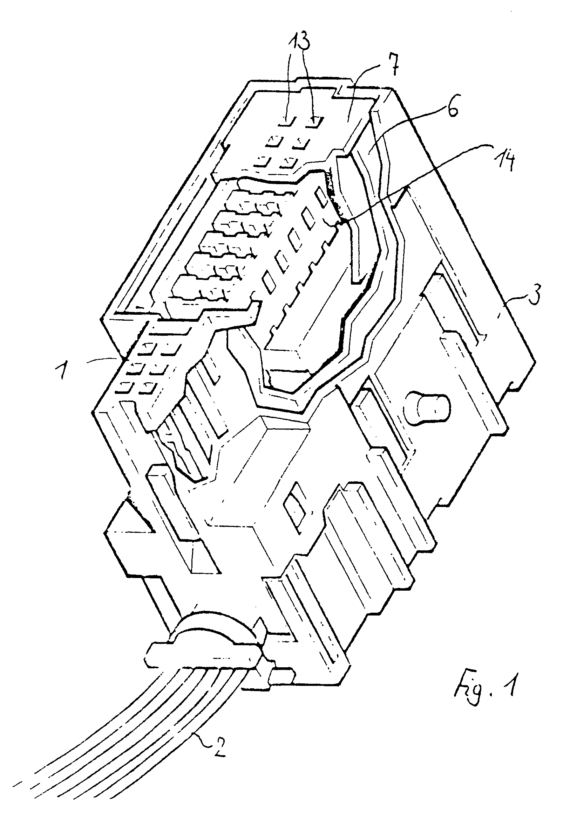

Fig. 1   ein Steckerteil als Teil einer Kontakteinrichtung in Kraftfahrzeugen, teilweise aufgebrochen und

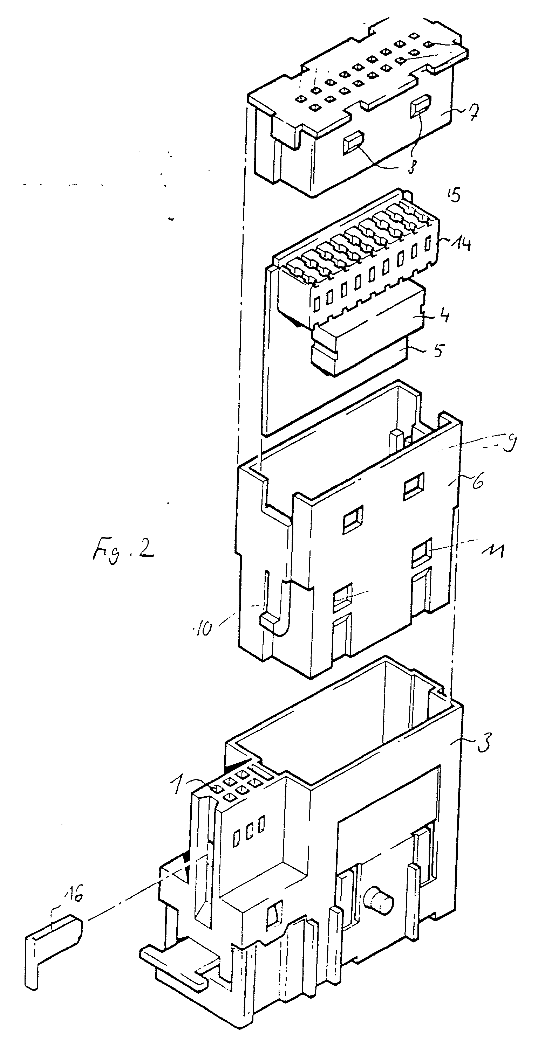

Fig. 2   die Bestandteile des Steckerteils von Fig. 1.

Eine Kontakteinrichtung für Kraftfahrzeuge enthält im wesentlichen zwei Steckerteile. Von diesen ist ein Steckerteil 1 dargestellt und mit einer schematisch gezeigten Verkabelung 2 verbunden und das andere Steckerteil (nicht dargestellt) und mit einem ebenfalls nicht dargestellten Mehrfach-Anzeigeinstrument verbunden. Die Verkabelung 2 führt zu nicht gezeigten elektrischen Verbrauchern, Sensoren oder dergleichen, die an verschiedenen Stellen innerhalb des Kraftfahrzeugs angeordnet sind. Das Steckerteil 1 besitzt eine Gehäuse 3, das zusätzlich zur Aufnahme eines Speicherbausteins 4 dient. Dieser sitzt auf einer Leiterplatte 5. Diese ist in einem Zwischengehäuse 6 durch ein Rastteil 7 nicht lösbar verrastet, das seinerseits im Gehäuse 3 nicht demontierbar gehalten ist. Zur mechanischen Verbindung zwischen Rastteil 7 und Zwischengehäuse 6 dienen Vorsprünge 8 am Rastteil 7, die an Aufnahmeöffnungen 9 des Zwischengehäuses 6 eingreifen. Die entsprechende Verbindung zwischen dem Zwischengehäuse 6 und dem Gehäuse 3 wird durch Klauen 10 am Zwischengehäuse bzw. durch Vorsprünge (nicht dargestellt) am Gehäuse 3 hergestellt, die in entsprechende Aufnahmeöffnungen des entsprechenden anderen Teils eingreifen. Von diesen Aufnahmeöffnungen sind welche im Zwischengehäuse 6 gezeigt (Bezugszeichen 11).

Die Leiterplatte 5 trägt ferner einen Kontaktkörper 14 und bildet über diesen eine elektrische Verbindung zwischen dem Speicherbaustein 4 und dem Anzeigeinstrument. Dabei greifen stiftförmige Kontaktteile (nicht gezeigt) des Anzeigeinstruments durch Öffnungen 13 des Rastteils 7 hindurch in entsprechend buchsenförmige Kontaktteile 15 des Kontaktkörpers 14 ein, die entsprechend den nicht gezeigten und durch einen Verriegelungsstift 16 gehaltenen Kontaktteilen des Steckerteils 1 ausgebildet sind und auf gleicher Höhe wie diese angeordnet sind.

Über die aus Leiterplatte 5 und Kontaktkörper 14 bestehende Verbindung erhält das Anzeigeinstrument des Inhalt des mit einem nicht-flüchtigen Speicher versehenen Speicherbausteins 8 und bringt diesen über nicht dargestellte Treiberschaltungen beispielsweise als digitale Informationen auf einem oder mehreren der Anzeigeinstrumente zur Darstellung. Bei diesem Inhalt kann es sich beispielsweise um die gesamte zurückgelegte Wegstrecke handeln, die von einem Wegimpulsgeber ausgehend über die Verkabelung 2 und das Anzeigeinstrument dem Speicherbaustein 8 mitgeteilt und dort festgehalten wird. Entsprechend kann es sich um eine Information über den Ablauf eines Serviceintervalls handeln, das ebenfalls durch die zurückgelegte gesamte Wegstrecke bestimmt wird. Dabei dient der Speicherbaustein 4 ferner zusammen mit der Leiterplatte 5 und dem Kontaktkörper 14 als Codierstecker. Er enthält hierzu fahrzeugspezifische Daten und Kennlinien.

Ist es nun erforderlich, das Anzeigeinstrument auszutauschen, so wird die Kontakteinrichtung aufgetrennt. Ein Ersatz-Anzeigeinstrument besitzt ein entsprechendes Steckerteil, das dann mit dem Steckerteil 1 und dem Kontaktkörper 14 zusammengefügt wird. Auf dem Anzeigeinstrument gelangt nunmehr wiederum der Inhalt des Speicherbausteins 4 zur Anzeige. Diese Anzeige ist gegenüber dem vorhergehenden Anzeigeinstrument unverändert. Damit ist es unmöglich, durch Austausch des Anzeigeinstruments den Inhalt der Anzeige zu verändern. Dies wäre nur durch Eingriff am Speicherbaustein 4 möglich, was jedoch aufgrund der geschützten und verriegelten Einbaulage verhindert wird.

**Patentansprüche**

1. Kontakteinrichtung in Kraftfahrzeugen zwischen einem Mehrfach-Anzeigeinstrument und einer zu zugeordneten elektrischen Geräten führenden Verkabelung, mit zwei kontaktgebend zusammengefügten Steckerteilen an der Verbindungsstelle zwischen Anzeigeinstrument und Verkabelung, von denen ein Steckerteil am Anzeigeinstrument und das andere an der Verkabelung gehalten ist, dadurch gekennzeichnet, daß der auf dem Anzeigeinstrument wiederzugebende Inhalt in einem nicht-flüchtigen elektronischen Speicher abgelegt und aus diesem für die Wiedergabe auf dem Anzeigeinstrument entnommen ist, und daß der den Speicher enthaltene Speicherbaustein (4) mit dem an der Verkabelung (2) gehaltenen Steckerteil (1) mechanisch unverlierbar verbunden ist.

2. Kontakteinrichtung nach Anspruch 1, gekennzeichnet durch ein gemeinsames Gehäuse (3) für den Speicherbaustein (4) und das an der Verkabelung (2) gehaltene Steckerteil (1).

3. Kontakteinrichtung nach einem der Ansprüche 1 oder 2, dadurch gekennzeichnet, daß der Speicherbaustein (4) einen Kontaktkörper (14) besitzt, der entsprechend dem an der Verkabelung (2) gehaltenen Steckerteil (1) aufgebaut ist und dessen Kontaktteile (15) mit denen dieses Steckerteils (1) in einer Ebene liegen.

4. Kontakteinrichtung nach den Ansprüchen 2 oder 3, dadurch gekennzeichnet, daß der Speicherbaustein (4) im Gehäuse (3) verriegelt ist.

**Claims**

1. A contact arrangement in motor vehicles between a multiple display instrument and wiring leading to associated electrical apparatus, with two plug parts, joined together so as to make contact, at the connection site between the display instrument and the wiring, one plug part of which is held against the display instrument and the other of which is held against the wiring, characterised in that the content which is to be reproduced on the display instrument is deposited in a non-failing electronic memory and is taken therefrom to be reproduced on the display instrument, and that the memory component (4) containing the memory is connected so as to be undetachable mechanically to the plug part (1) which is held against the wiring (2).

2. A contact arrangement according to Claim 1, characterised by a common housing (3) for the memory component (4) and the plug part (1) which is held against the wiring (2).

3. A contact arrangement according to one of Claims 1 or 2, characterised in that the memory component (4) has a contact member (14) which is constructed in accordance with the plug part (1) which is held against the wiring (2) and the contact parts (15) of which lie in a plane with those of this plug part (1).

4. A contact arrangement according to Claims 2 or 3, characterised in that the memory component (4) is locked in the housing (3).

**Revendications**

1. Dispositif de contact pour automobiles entre un appareil indicateur multiple et un câblage allant vers des appareils électriques raccordés avec deux pièces d'enfichage assemblées et formant contact à l'endroit de la liaison entre l'appareil indicateur et le câblage, pièces dont l'une est reliée à l'appareil indicateur et l'autre au câblage, caractérisé en ce que le contenu des informations à reproduire sur l'appareil indicateur est déposé dans une mémoire électronique non fugace et est extrait, à partir de celle-ci pour être reproduit sur l'appareil indicateur et en ce que le module de mémoire (4) contenant la mémoire est relié à la pièce d'enfichage (1)fixée sur le câblage (2) d'une manière mécanique imperdable.

2. Dispositif de contact selon la revendication 1, caractérisé en ce que l'on a un boîtier commun (3) pour le module de mémoire (4) et la pièce d'enfichage (1) fixée au câblage (2).

3. Dispositif de contact selon la revendication 2, caractérisé en ce que le module de mémoire (4) possède un corps de contacts (14) qui est construit de façon à correspondre à la pièce d'enfichage (1) fixée au câblage (2) et dont les pièces de contact (15) se trouve dans le même plan que celles de cette pièce d'enfichage (1).

4. Dispositif de contact selon les revendications 2 ou 3, caractérisé en ce que le module de mémoire (4) est verrouillé dans le boîtier (3).

Fig. 1

Fig. 2